# EUROPÄISCHE PATENTSCHRIFT

(11) **EP 3 786 512 B1**
(45) Veröffentlichungstag und Bekanntmachung des Hinweises auf die Patenterteilung: **30.07.2025**
(21) Anmeldenummer: 19194566.6
(22) Anmeldetag: 30.08.2019
(51) Int. Cl.: F17C 1/06, F17C 1/08

(54) **VERFAHREN ZUR HERSTELLUNG EINES DRUCKBEHÄLTERS UND DRUCKBEHÄLTER**
METHOD FOR PRODUCING A PRESSURISED CONTAINER AND PRESSURISED CONTAINER
PROCÉDÉ DE FABRICATION D'UN RÉCIPIENT SOUS PRESSION ET RÉCIPIENT SOUS PRESSION

(43) Veröffentlichungstag der Anmeldung: 03.03.2021
(73) Patentinhaber: NPROXX B.V., 6422 RK Heerlen (NL)
(72) Erfinder: Müller, Dietmar, 32052 Herford (DE); Otremba, Frank, 52223 Stolberg (DE)
(74) Vertreter: Heuking Kühn Lüer Wojtek PartGmbB

(56) Entgegenhaltungen:
- WO-A1-2016/038257
- DE-A1- 10 156 377
- DE-A1- 102011 105 627
- DE-A1- 102016 222 674
- DE-A1- 3 103 646
- DE-B4- 10 156 377
- US-A1- 2018 299 067

## Beschreibung

Die Erfindung betrifft ein Verfahren zur Herstellung eines Druckbehälters.

### Hintergrund der Erfindung

Der Markt für Druckbehälter, insbesondere für Druckbehälter, die mit Faserverbundmaterial verstärkt werden, wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Fahrzeugsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Hierbei sei nicht nur an den Automobile, sondern auch an Schienen-, Luft- und Wasserfahrzeuge gedacht. Selbst bei Raumfahrzeugen ist eine Anwendung vorstellbar. Für den Transport der Druckbehälter sind leichte Druckbehälter gewünscht, weil ein Transport von Druckbehältern mit hohen Behältergewichten unnötig viel Energie verbraucht und daher zu hohe Transportkosten verursacht.

Gegenwärtig benutzte zylinderförmige faserverstärkte Druckbehälter besitzen eine Verstärkungsschicht aus Faserverbundmaterial aus Fasern eingebettet in einem Matrixmaterial, die als Außenschicht mittels eines Wickelverfahrens auf einen Innenbehälter (den sogenannte Liner) des Druckbehälters, der als Wickelkern fungiert, aufgewickelt wird. Ein Wickelverfahren ist für die zeit- und kostengünstige Herstellung von Faserverbundschichten der bevorzugte Prozess. Während der Innenbehälter beispielsweise die Gasdichtigkeit des Druckbehälters garantiert, verleiht die Verstärkungsschicht aus Faserverbundmaterial dem Druckbehälter die notwendige mechanische Stabilität. Bei den Druckbehältern des Typs 3 wird ein metallischer Innenbehälter (metallischer Liner) z.B. aus Aluminium oder Stahl eingesetzt, bei Druckbehältern des Typs 4 ist der nicht tragende Innenbehälter (Liner) aus Kunststoff. Die Kunststoffliner werden üblicherweise durch Blasformen, Rotomoulding oder Schweißen einzelner Komponenten hergestellt. Dabei können insbesondere Werkstoffe eingesetzt werden, die gute Permeationseigenschaften gegenüber Wasserstoff aufweisen, wie beispielsweise Polyamide, oder Polyethylene, insbesondere Polyethylen höher Dichte. Die Druckbehälter müssen einem sehr hohen Innendruck standhalten. Gegenwärtig werden beispielsweise Wasserstofftanks von Automobilen mit einem Druck von ca. 700 bar betankt. Insbesondere dürfen die Druckbehälter auch im Crashfall nicht besten. Daher werden solche Druckbehälter mit einem zylindrischen Mittelteil, das beidseitig mit sogenannten Polkappen verschlossen ist, konstruiert. Die Verstärkungsschichten werden zum Ausgleich von Fertigungstoleranzen entsprechend überdimensioniert. Beispielsweise wird die Verstärkungsschicht im Filament Winding Verfahren hergestellt, mit dem die Druckbehälter in einem Arbeitsgang gewickelt werden. Mit anderen Worten werden in einem Arbeitsgang die Fasern in Umfangs- und Kreuzlagen oder Helixlagen auf den Kunststoffliner aufgewickelt. Die Fertigung solcher Druckbehälter ist damit aufwändig und teuer.

Aus der US-amerikansichen Offenlegungsschrift US 2018 / 299 067 A1 ist ein Druckbehälter bekannt, der einen röhrenförmigen Körper enthält, der aus einem Verbundmaterial aufgebaut ist. Ein Paar Endkappen ist klebend an gegenüberliegenden Enden des Körpers befestigt. Im Inneren des Körpers ist eine flexible, flüssigkeitsundurchlässige Auskleidung vorgesehen. Die flexible, flüssigkeitsundurchlässige Auskleidung wird aus einer dünnen Beschichtung gebildet, die auf den Körper aufgebracht wird.

Die deutsche Offenlegungsschrift DE 10 2011 105 627 A1 offenbart ein Zusammenbauverfahren für einen Verbund-Druckbehälter, wobei ein Endabschnitt eines rohrförmigen Elements in einen kreisringförmigen Schlitz gepasst wird, der in einer Endkappe gebildet ist. In dem kreisringförmigen Schlitz kann sich ein Dichtungsmittel befinden. Die Endkappe umfasst eine Ringnut in einer Außenfläche des Endkappenkörperabschnittes. Es wird eine erste Materiallage auf einer Außenfläche des rohrförmigen Elements gebildet. Die erste Materiallage umfasst ein erstes Verbundmaterial mit Fasern, die in Umfangsrichtung zu dem rohrförmigen Element orientiert sind. Es wird eine zweite Materiallage auf der ersten Materiallage gebildet, wobei ein Abschnitt der zweiten Materiallage in die Ringnut hinein angeordnet wird, die ein zweites Verbundmaterial umfasst, welches Fasern, die axial zu dem rohrförmigen Element orientiert sind, umfasst. Es wird eine dritte Materiallage benachbart zu der zweiten Materiallage und in der Ringnut gebildet, welche ein drittes Verbundmaterial mit Fasern umfasst, die eine Orientierung in Umfangsrichtung zu dem rohrförmigen Element aufweisen. Ein vorgefertigtes zylindrisches Rohr ist dabei Teil des Liners, liegt also innen im Druckbehälter.

Die deutsche Offenlegungsschrift DE 31 03 646 A1 offenbart einen Druckbehälter zur Lagerung sowie zum Transport gasförmiger Strömungsmittel. Der Druckbehälter weist einen rohrartigen Metallkörper, der wenigstens an einem Ende zu einer kalottenartigen Abschlußkappe verformt ist, auf. Die Wandstärke des rohrartigen Abschnittes des aus Aluminium oder einer Aluminiumlegierung bestehenden Metallkörpers ist gegenüber der Wandstärke der kalottenartigen Kappe vermindert und von einem Mantel aus faserverstärktem, insbesondere mit Glas-, Kohlenstoff-. Aramid- oder Borfasern verstärktem Kunststoff umgeben.

Die deutsche Offenlegungsschrift DE 10 2016 222 674 A1 offenbart ein Verfahren zum Herstellen eines Druckbehälters, einen Druckbehälter und eine Rohrextrusionsanlage. Das Verfahren umfasst die Schritte: Bereitstellen eines Mittelteils des Druckbehälters, wobei das Mittelteil ein extrudiertes Linerrohr umfasst, welches zumindest teilweise von mindestens einer faserverstärkten Schicht umgeben ist; Zusammenfügen des Mittelteils mit mindestens einem Endstück; und Aufbringen von mindestens einer faserverstärkten Außenschicht, wobei sich die faserverstärkte Außenschicht zumindest bereichsweise erstreckt über das mindestens eine Endstück und über das Mittelteil. Das zylindrische Rohr ist Teils des Liners und liegt also innen im Druckbehälter.

Die deutsche Offenlegungsschrift DE 10 156 377 A1 offenbart einen Komposit-Druckgasbehälter, ein Verfahren zu dessen Herstellung und dessen Verwendung. Der Druckgasbehälter besteht aus einem Verbund eines zylindrischen Metallbehälters und einem vorgefertigten Mantelrohr. Das Mantelrohr besteht bevorzugt aus Fasermaterial wie GFK oder CFK und dient der Verstärkung.

Es besteht der Wunsch, die Herstellung faserverstärkte Druckbehälter effizienter zu gestalten.

### Zusammenfassung der Erfindung

Die Aufgabe der Erfindung ist es, ein Herstellverfahren für faserverstärkte Druckbehälter anzugeben, das sich effizienter und kostengünstiger gegenüber den im Stand der Technik bekannten Verfahren durchführen lässt, wobei mindestens die gleichen Anforderungen an den Druckbehälter getroffen werden.

Die Aufgabe wird mit dem Herstellverfahren gemäß Anspruch 1 gelöst.

Der Begriff "Druckbehälter" umfasst alle Arten und Formen von Druckbehältern, die einen Innenbehälter, auch Liner genannt, beispielsweise aus einem thermoplastischen Material umfassen und mit einem Faserverbundmaterial außen mechanisch so verstärkt wurden, dass der Druckbehälter die Anforderungen an seine Druckbeständigkeit erfüllt. In der Regel sind diese Druckbehälter zylinderförmig mit nach außen gewölbten Abschlüssen auf beiden Seiten des zylinderförmigen Mittelteils. Diese Anschlüsse werden als Polkappen bezeichnet und dienen zum druckdichten Verschluss des Mittelteils. Zur Verstärkung des Druckbehälters wird die Außenseite des Innenbehälters mit einer Außenschicht aus Faserverbundmaterial überwickelt, was gleichzeitig die Außenseite des Druckbehälters bilden kann. Der Innenbehälter kann mit verschiedenen Techniken hergestellt sein, beispielsweise mittels eines Schweißverfahrens, mittels Spritzguss oder als Blasformteil. Hierbei können die Polkappen auch nachträglich auf den Mittelteil aufgesetzt werden, beispielsweise mittels Verschweißen. Die separaten Polkappen können beispielsweise mittels Spritzguss hergestellt werden. Druckbehälter mit einem thermoplastischen Innenbehälter besitzen einerseits ein sehr geringes Gewicht, was beispielsweise für Anwendungen in Transportmitteln wichtig ist, und andererseits können Füllungen wie beispielsweise Wasserstoff unter hohem Druck verlustarm gespeichert werden, da geeignete Kunststoffe aus thermoplastischem Material eine hinreichend geringe Wasserstoffpermeabilität besitzen und die benötigte Festigkeit durch die Außenschicht aus Faserverbundmaterial bereitgestellt wird.

Ein Faserverbundmaterial für die Faserverbundschicht besteht im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einer Faser oder aus mehreren Fasern gewickelt werden, wobei die Faser(n) in Kontakt zueinander eng nebeneinander gewickelt werden. Hierbei sind die gewickelten Fasern bereits mit Matrixmaterial getränkt. Dadurch entsteht eine Faserschicht, auf die die Fasern in weiteren Faserschichten gewickelt werden, bis das Faserverbundmaterial die gewünschte Dicke besitzt und eine entsprechende Faserlage mit dieser Dicke darstellt. Die Außenschicht wird dabei in mehreren Lagen aus Faserverbundmaterial gewickelt, wobei unterschiedliche Lagen Fasern mit unterschiedlichen Faserwinkeln zur Zylinderachse des Druckbehälters aufweisen können. In einer Ausführungsform umfassen die Faserlagen aus ersten und/oder weiteren Fasern, beispielsweise zweiten Fasern, jeweils mehrere Lagen an Fasern. Durch den Verbund erhält das Faserverbundmaterial höherwertige Eigenschaften, wie beispielsweise eine höhere Festigkeit als jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehnung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern, verwendet werden. Als Matrixmaterialien für die Faserverbundschicht werden hierbei in der Regel Duromere verwendet. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können einzelne Faserlagen im Faserverbundbereich eine einzelne Faser oder mehrere gleiche oder unterschiedliche Fasern umfassen.

Der Begriff "thermoplastisches Material" bezeichnet Kunststoffe, die sich in einem bestimmten Temperaturbereich (thermo-plastisch) verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Darin unterscheiden sich Thermoplaste von den Duroplasten (oder Duromeren) und Elastomeren. Ein weiteres Alleinstellungsmerkmal ist die Schweißbarkeit von Thermoplasten im Gegensatz zu beispielsweise Duromeren.

Die Erfindung schlägt vor, zunächst einen Druckbehälterrohling zu fertigen. Damit wird die Fertigung des Druckbehälterrohlings von der des gesamten Druckbehälters abgetrennt. Der Druckbehälterrohling wird somit separat hergestellt. Unter einer "separaten Fertigung" wird hier und im Folgenden eine Fertigung getrennt von, insbesondere vorgelagert zu der eigentlichen Fertigung des Druckbehälters verstanden. In der eigentlichen Fertigung des Druckbehälters wird dieser durch ein Überwickeln des Druckbehälterrohlings beispielsweise mit einem Faserverbundmaterial hergestellt. Durch die separate Fertigung des Druckbehälterrohlings kann dieser unter optimalen Bedingungen hergestellt werden, was die Effizienz und Qualität dieses Bauteils und damit des gesamten Druckbehälters erhöht. Darüber hinaus wird die Geometrie des Druckbehälters nur noch von den vorgefertigten zylindrischen Rohren und nicht mehr vom Liner bestimmt, womit die Fertigungsgenauigkeit bzgl. der Länge als auch des Durchmessers des Druckbehälters erhöht wird.

Detailliert kann das Fertigungsverfahren die Schritte Fertigung und Bearbeitung einer Polkappenverstärkung, Fertigung und Bearbeitung des zylindrischen Rohres, Montage eines Anschlussstücks (Boss) in den Liner, Fügen des zylindrischen Rohres und der Polkappen mit dem Liner, Fixieren der Positionen von zylindrischem Rohr und Polkappenverstärkungen, beispielsweise durch punktuelles Verkleben, Überwickeln des so hergestellten Rohlings mit Helix- und Umfangslagen aus einem Faserverbundmaterial und Aushärten des Gesamtsystems, aufweisen.

Erfindungsgemäß wird das zylindrische Rohr separat hergestellt. Hierdurch ist es möglich, das Rohr aus unterschiedlichen Werkstoffen mit dem auf den jeweiligen Werkstoff optimal abgestimmten Fertigungsverfahren herstellen zu können. Darüber hinaus kann die Herstellung des zylindrischen Rohres hierdurch leicht automatisiert werden, wodurch die Effizienz der Herstellung weiter gesteigert wird.

In einer weiteren vorteilhaften Ausführungsform ist das zylindrische Rohr aus einem Faserverbundmaterial gewickelt. Das Faserverbundmaterial kann beispielsweise ein Kohlenstoffverstärkter Kunststoff (CFK) sein. Bauteile aus CFK sind einerseits leicht, weisen aber andererseits eine sehr hohe Festigkeit auf. Ist das zylindrische Rohr aus einem Werkstoff derselben Gruppe gefertigt, mit dem später der Druckbehälterrohling überwickelt wird, bringt dies Vorteile bei der Verbindung des Druckbehälterrohlings mit der überwickelten Schicht mit sich, wodurch die Festigkeit des Druckbehälters insgesamt erhöht wird. Durch die Herstellung des zylindrischen Rohres als Faserverbundbauteil auf einer separaten Wickelmaschine kann die Wickelgeschwindigkeit und die Anzahl der gleichzeitig aufgewickelten Fäden erhöht werden. Das zylindrische Rohr kann hierdurch aber auch mit einer anderen Fasertype hergestellt werden als der übrige Druckbehälter. Dies kann für bestimmte Anwendungsfälle vorteilhaft sein. Darüber hinaus wird die Taktzeit der eigentlichen Behälterwickelmaschine, auf der in einem späteren Arbeitsgang der Druckbehälter durch Überwickeln des Druckbehälterrohlings erzeugt wird, deutlich reduziert. Dies ist insbesondere deshalb vorteilhaft, da das zylindrische Rohr wegen seiner einfachen, zylindrischen Geometrie auf einer einfacheren und damit günstigeren Wickelmaschine gefertigt werden kann, als der Druckbehälter. Der Druckbehälter weist Polkappen auf, die mit Helixlagen umwickelt werden müssen, während das zylindrische Rohr in einer Ausführungsform nur mit Umfangslagen wickelbar ist. Über die separate Fertigung des zylindrischen Rohres lassen sich darüber hinaus unterschiedliche Faserwinkel in den Umfangslagen oder unterschiedliche Fasertypen mit unterschiedlichen Steifigkeiten einfacher ins Produkt einbringen als bei konventioneller Fertigung.

Darüber hinaus kann das zylindrische Rohr mit einer geringeren Wandstärke als der Gesamtbehälter gefertigt werden, was die Gefahr der Faserwelligkeit reduziert und damit die Auslastungsmöglichkeit der Fasern erhöht.

In einer weiteren vorteilhaften Ausführungsform wird das zylindrische Rohr auf einem metallischen Wickelkern gewickelt. Die Ablage der Fäden erfolgt auf einem metallischen Wickelkern präziser als auf einem Kunststoffliner. Die Faserausnutzung kann hierdurch erhöht werden. Darüber hinaus kann ein metallischer Wickelkern sehr genau gefertigt werden, wodurch der Innendurchmesser des hierauf gewickelten zylindrischen Rohres bzw. des hierauf gewickelten zylindrischen Rohrhalbzeugs sehr exakt herstellbar ist. Hierdurch kommt es zu einer Reduktion der Herstelltoleranzen, was zu einer Erhöhung des Füllvolumens des Druckbehälters bei gegebenem Bauraum führen kann.

In einer weiteren vorteilhaften Ausführungsform wird das zylindrische Rohr auf einem langen Wickelkern gefertigt, so dass sich mit einer Wicklung mehrere Nutzen ergeben. Mit anderen Worten wird zunächst ein zylindrisches Rohrhalbzeug gewickelt, von dem das zylindrische Rohr abgelängt wird. Insbesondere bei Verwendung von metallischen Wickelkernen ist wegen derer Festigkeit die Wicklung von sehr langen zylindrischen Rohrhalbzeugen möglich. Durch die Wicklung eines möglichst langen zylindrischen Rohrhalbzeugs mit abschließendem Ablängen zur Produktion von metallischen Rohren ist eine weitere Effizienzsteigerung der Fertigung möglich. Ebenso ist es aber auch möglich, das zylindrische Rohr auf dem Wickelkern zum Beispiel mit Hilfe sogenannter Boardscheiben auf Endmaß zu fertigen, so dass kein Ablängen oder andere Nacharbeit erforderlich ist.

Gemäß der Erfindung wird das das zylindrische Rohr höchstens teilausgehärtet. Damit ist es handelbar und mechanisch bearbeitbar und kann beim endgültigen Aushärten nach der Überwicklung noch eine stoffschlüssige Verbindung mit der Überwicklung eingehen.

In einer weiteren Ausführungsform wird das zylindrische Rohr extrudiert. Die Extrusion ist ein sehr wirtschaftliches Herstellverfahren. Insbesondere können mittels Extrusion sehr lange Rohrhalbzeuge hergestellt werden, von denen entsprechend zylindrische Rohre abgelängt werden können. Insbesondere langfaserverstärke Materialien sowie duroplastische Materialien lassen sich allerdings nicht extrudieren, so dass für die Extrusion beispielsweise kurzfaserverstärke thermoplastische Kunststoffe wie beispielsweise faserverstärkte Polyamide, verwendet werden können, die aber bzgl. ihrer Festigkeit Nachteile gegenüber gewickelten Rohren aufweisen können.

In einer weiteren Ausführungsform wird das zylindrische Rohr pultrudiert. Im Pultrusionsverfahren können Materialien verarbeitet werden, die längere Fasern bis hin zu sogenannten Endlosfasern aufweisen können, als im Extrusionsverfahren verarbeitbare Materialien. Durch die längeren Fasern kann die Festigkeit so hergestellter Rohre gegenüber extrudieren Rohren erhöht werden.

In einer weiteren vorteilhaften Ausführungsform weist der Liner eine Außengeometrie zur Aufnahme des zylindrischen Rohres auf, so dass das zylindrische Rohr einen Formschluss mit dem Liner eingehen kann. Insbesondere, wenn dieser Formschluss am Übergang vom zylindrischen Teil des Druckbehälters zu den Polkappen, insbesondere wenn die Polkappen Polkappenverstärkungen aufweisen, können Probleme beim so genannten Kaltbetanken vermieden werden. Wenn sich der Formschluss nur einer Seite des Druckbehälters befindet, kann das zylindrische Rohr auf den Liner von der anderen Seite aus aufgeschoben werden. Weist die Außengeometrie des Liners eine Vertiefung auf, in die sich das zylindrische Rohr einschmiegen kann, d.h. wenn sich der Formschluss auf beiden Seiten des Liners befindet, kann das zylindrische Rohr durch ein Schrumpfverfahren mit dem Liner gefügt werden.

In der Regel bilden Boss, Liner und das zylindrische Rohr eine Oberfläche. Die drei Komponenten werden dann gemeinsam überwickelt. In einer Ausführungsform kann das zylindrische Rohr in direktem Kontakt mit dem metallischen Boss stehen. Der Kunststoffliner hat dann keinen direkten Kontakt mehr zu der Verstärkungswicklung.In einer alternativenvorteilhaften Ausführungsform wird vor der Überwicklung des Druckbehälterrohlings eine Polkappenverstärkung auf zumindest einen Polbereich des Liners aufgebracht. Die Polkappenverstärkung kann wie der Druckbehälterrohling separat hergestellt werden, wodurch sich die Herstellung der Polkappenverstärkung erleichtert und die Polkappenverstärkung derart herstellbar ist, dass eine optimale Verstärkungswirkung erreicht wird. In diesem Fall hat das zylindrische Rohr in der Regel keinen direkten Kontakt mit dem metallischen Boss.

In einer weiteren vorteilhaften Ausführungsform wird das zylindrisches Rohr auf den Liner aufgepresst. Durch das Aufpressen kann ein separat gefertigtes zylindrisches Rohr mit einem Liner mit Hinterschnitten, die einen Formschluss mit dem zylindrischen Rohr bilden können, gefügt werden. Darüber hinaus ist es durch das Aufpressen möglich, eine vorgespannte Verbindung zwischen Liner und zylindrischem Rohr herzustellen, was Vorteile bzgl. einer eventuellen Spaltbildung zwischen Liner und zylindrischem Rohr im Betrieb des Druckbehälters haben kann. Der Pressprozess kann mechanisch, beispielsweise durch Anlagen von Unterdruck an den Innenraum des Liners erfolgen. Dadurch schrumpft der Durchmesser des Liners temporär. Das Rohr kann nun über den Liner geschoben werden. Nach Wegnehmen des Unterdrucks wächst der Liner gegen die Rohrinnenfläche..

In einer weiteren vorteilhaften Ausführungsform wird das zylindrisches Rohr thermisch auf den Liner gefügt. Hierzu kann der Liner vor dem Fügen stark abgekühlt werden und/oder das zylindrische Rohr erhitzt werden. Durch das Abkühlen schrumpft der Liner, d.h. sein Durchmesser wird kleiner. Umgekehrt steigt der Durchmesser des zylindrischen Rohres bei Erwärmung. Gleichen sich die Temperaturen nach dem Fügevorgang an, entsteht die Schrumpfverbindung.

In einer weiteren vorteilhaften Ausführungsform wird das zylindrische Rohr mit dem Liner verklebt. Hierdurch entsteht eventuell zusätzlich zu der Schrumpfverbindung eine feste Verbindung, wodurch eine eventuelle Spaltbildung zwischen Liner und zylindrischem Rohr im Betrieb des Druckbehälters minimiert oder sogar vollständig verhindert werden kann.

Für die Verklebung hat es sich als vorteilhaft erwiesen, wenn vor der Verklebung der Innenumfang des zylindrischen Rohres zumindest teilweise vorbehandelt, d.h. bearbeitet, wird. Dabei kann es sich um beispielsweise eine chemische Vorbehandlung oder eine mechanische Vorbehandlung handeln. Beispielsweise kann der Innenumfang des zylindrischen Rohres mit abrasiven Verfahren aufgeraut werden. Hierdurch wird die Oberfläche des Innenumfangs des zylindrischen Rohres erhöht, wodurch eine festere Verklebung erreicht werden kann. Ein weiteres Beispiel für eine solche Bearbeitung ist die Bearbeitung mit einem Laser.

Darüber hinaus kann die Oberfläche des Innenumfangs strukturiert werden. Diese Maßnahme kann zur Abführung von evtl. eindringendem Gas zwischen Linder und zylindrischem Rohr führen, was zur Vermeidung des sogenannten Linerbucklings helfen kann.

Eine Bearbeitung des Innenumfangs des zylindrischen Rohres ist nur durch dessen separate Fertigung möglich.

Die voranstehend aufgelisteten Ausführungsformen können einzeln oder in beliebiger Kombination verwendet werden, ohne vom Umfang der Ansprüche abzuweichen.

### Kurze Beschreibung der Abbildungen

Diese und andere Aspekte der Erfindung werden im Detail in den Abbildungen wie folgt gezeigt.
- **Fig.1:**: ein seitlicher Schnitt durch einen Ausschnitt eines Druckbehälters
- **Fig.2:**: ein seitlicher Schnitt durch einen Ausschnitt eines weiteren Druckbehälters

### Detaillierte Beschreibung der Ausführungsbeispiele

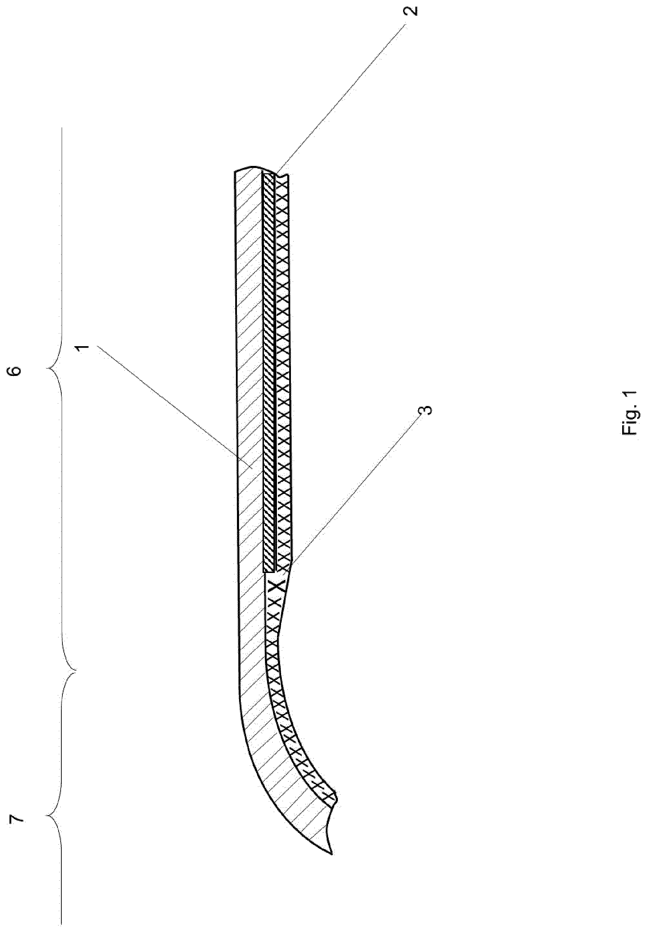

Fig.1 zeigt einen seitlichen Schnitt durch einen Ausschnitt eines Druckbehälters. Insbesondere zeigt Fig. 1 einen Schnitt durch den Wandaufbau eines erfinderischen Druckbehälters. Die Druckbehälterwand weist auf ihrer Außenseite ein Überwicklung 1 aus einem Faserverbundwerkstoff auf. Diese Überwicklung 1 ist auf einen Druckbehälterrohling, aufweisend ein zylindrisches Rohr 2 und einen Liner 3 als Innenlage, aufgebracht. Das zylindrische Rohr 2 befindet sich im Bereich des zylindrischen Mittelteils 6 des Druckbehälters. Der Liner 3 weist eine Außengeometrie zur Aufnahme des zylindrischen Rohres 2 auf, so dass das zylindrische Rohr 2 einen Formschluss mit dem Liner 3 eingeht. Dieser Formschluss befindet sich am Übergang vom zylindrischen Mittelteil 6 des Druckbehälters zu dem Polkappenbereich 7. Die Außengeometrie des Liners 3 weist dabei eine Vertiefung auf, in die sich das zylindrische Rohr 2 einschmiegt. Der Formschluss kann so gestaltet sein, dass er in axialer oder/und in radialer Richtung wirkt.

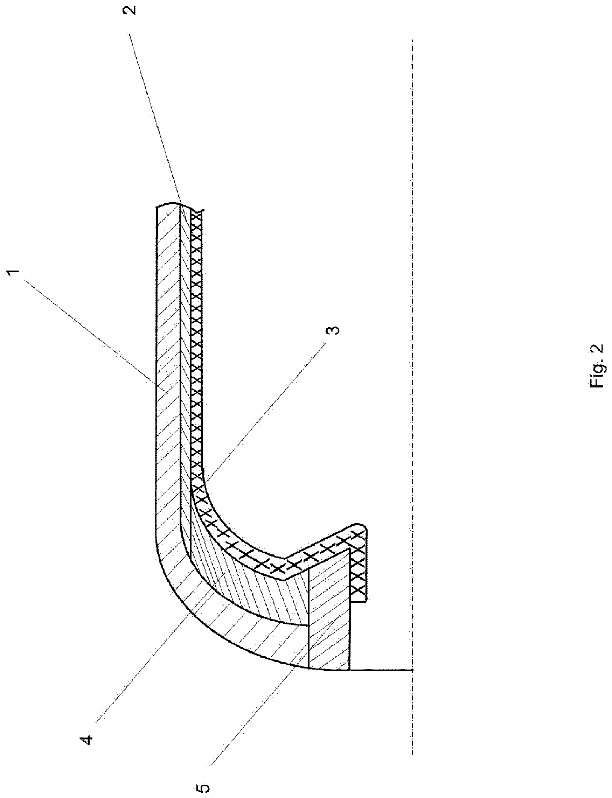

Fig.2 zeigt einen seitlichen Schnitt durch einen Ausschnitt eines weiteren Druckbehälters. Der Druckbehälter weist eine Polkappenverstärkung 4 im Polkappenbereich 7 auf, die vor der Überwicklung des Druckbehälterrohlings auf den Polkappenbereich 7 aufgebracht ist. Die Polkappenverstärkung 4 kann wie der Druckbehälterrohling separat hergestellt werden, wodurch sich die Herstellung der Polkappenverstärkung 4 erleichtert und die Polkappenverstärkung 4 derart herstellbar ist, dass eine optimale Verstärkungswirkung erreicht wird. In die Polkappenverstärkung 4 und die Überwicklung 1 ist ein Anschlussstück 5, auch Boss genannt, eingebracht, das der Befüllung des Druckbehälters sowie der Entnahme des Füllstoffs, beispielsweise eines Gases, dient. Der Boss 5 ist derart in den Druckbehälter eingebracht, dass sich der Liner um ihn herumschmiegt. In der in der Fig. 2 dargestellten Ausführungsform weist der Liner 2 keine spezielle Außengeometrie zur Aufnahme des zylindrischen Rohres 2 auf, sondern ist ein Standardliner mit zylindrischer Außengeometrie ohne Hinterschnitte.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Ansprüche erfasst.

### Bezugszeichenliste

- 1: Überwicklung
- 2: Zylindrisches Rohr
- 3: Liner
- 4: Polkappenverstärkung
- 5: Boss
- 6: Zylindrischer Mittelteil
- 7: Polkappenbereich

## Patentansprüche

1. . Verfahren zur Herstellung eines faserverstärkten Druckbehälters,
**gekennzeichnet durch die Schritte**
1) Herstellung eines Druckbehälterrohlings, wobei der Druckbehälterrohling zumindest einen Liner aus Kunststoff (3) und ein mit ihm wirkverbundenes zylindrisches Rohr (2) aufweist, wobei das zylindrische Rohr (2) separat hergestellt wird, wobei das zylindrische Rohr (2) höchstens teilausgehärtet ist;
2) Überwickeln des Druckbehälterrohlings.

2. . Verfahren gemäß Anspruch 1,
**dadurch gekennzeichnet,**
**dass** das zylindrische Rohr (2) aus Faserverbundmaterial gewickelt wird.

3. . Verfahren gemäß Anspruch 2,
**dadurch gekennzeichnet,**
**dass** das zylindrische Rohr (2) auf einem metallischen Wickelkern gewickelt wird.

4. . Verfahren gemäß einem der Ansprüche 1 bis 3,
**dadurch gekennzeichnet,**
**dass** das das zylindrische Rohr (2) von einem zylindrischen Rohrhalbzeug abgelängt wird.

5. . Verfahren gemäß einem der Ansprüche 1 bis 3,
**dadurch gekennzeichnet,**
**dass** das das zylindrische Rohr (2) auf Endmaß gewickelt wird.

6. . Verfahren gemäß Anspruch 1,
**dadurch gekennzeichnet,**
**dass** das zylindrische Rohr (2) extrudiert wird.

7. . Verfahren gemäß Anspruch 1,
**dadurch gekennzeichnet,**
**dass** das zylindrische Rohr (2) pultrudiert wird.

8. . Verfahren gemäß einem der vorhergehenden Ansprüche,
**dadurch gekennzeichnet,**
**dass** der Liner aus Kunststoff (3) eine Außengeometrie zur Aufnahme des zylindrischen Rohres (2) aufweist, so dass das zylindrische Rohr (2) einen Formschluss mit dem Liner aus Kunststoff (3) aufweist.

9. . Verfahren gemäß einem der vorhergehenden Ansprüche,
**dadurch gekennzeichnet,**
**dass** ein Boss (5) in direktem Kontakt zu dem zylindrischen Rohr (2) steht.

10. . Verfahren gemäß einem der vorhergehenden Ansprüche,
**dadurch gekennzeichnet,**
**dass** vor der Überwicklung des Druckbehälterrohlings eine Polkappenverstärkung (4) auf zumindest einen Polbereich des Liners aus Kunststoff (3) aufgebracht wird.

11. . Verfahren gemäß einem der vorhergehenden Ansprüche,
**dadurch gekennzeichnet,**
**dass** das zylindrische Rohr (2) auf den Liner aus Kunststoff (3) aufgepreßt wird.

12. . Verfahren gemäß Anspruch 10,
**dadurch gekennzeichnet,**
**dass** das zylindrische Rohr (2) thermisch auf den Liner aus Kunststoff (3) gefügt wird.

13. . Verfahren gemäß einem der vorherigen Ansprüche,
**dadurch gekennzeichnet,**
**dass** das zylindrische Rohr (2) mit dem Liner aus Kunststoff (3) verklebt wird.

14. . Verfahren gemäß einem der vorherigen Ansprüche,
**dadurch gekennzeichnet,**
**dass** das zylindrische Rohr (2) zumindest auf seinem Innenumfang zumindest teilweise bearbeitet wird, bevor es mit dem Liner aus Kunststoff (3) wirkverbunden wird.

## Claims

1. A method for producing a fiber-reinforced pressure container,
**characterized by the steps of**
1) producing a pressure container blank, wherein the pressure container blank has at least one liner made of plastic (3) and a cylindrical pipe (2) operatively connected thereto, wherein the cylindrical pipe (2) is produced separately, wherein the cylindrical pipe (2) is at most partially cured;
2) overwrapping the pressure container blank.

2. The method according to claim 1,
**characterized in**
**that** the cylindrical pipe (2) is wound from fiber composite material.

3. The method according to claim 2,
**characterized in**
**that** the cylindrical pipe (2) is wound on a metallic winding core.

4. The method according to any one of claims 1 to 3,
**characterized in**
**that** the cylindrical pipe (2) is cut to length from a cylindrical semi-finished pipe.

5. The method according to any one of claims 1 to 3,
**characterized in**
**that** the cylindrical pipe (2) is wound to its final dimension.

6. The method according to claim 1,
**characterized in**
**that** the cylindrical pipe (2) is extruded.

7. The method according to claim 1,
**characterized in**
**that** the cylindrical pipe (2) is pultruded.

8. The method according to any one of the preceding claims,
**characterized in**
**that** the liner made of plastic (3) has an outer geometry for receiving the cylindrical pipe (2) so that the cylindrical pipe (2) has a positive connection to the liner made of plastic (3).

9. The method according to any one of the preceding claims,
**characterized in**
**that** a boss (5) is in direct contact with the cylindrical pipe (2).

10. The method according to any one of the preceding claims,
**characterized in**
**that** prior to the overwrapping of the pressure container blank, a pole cap reinforcement (4) is applied to at least one pole region of the liner made of plastic (3).

11. The method according to any one of the preceding claims,
**characterized in**
**that** the cylindrical pipe (2) is pressed onto the liner made of plastic (3).

12. The method according to claim 10,
**characterized in**
**that** the cylindrical pipe (2) is thermally joined to the liner made of plastic (3).

13. The method according to any one of the preceding claims,
**characterized in**
**that** the cylindrical pipe (2) is adhesively bonded to the liner made of plastic (3).

14. The method according to any one of the preceding claims,
**characterized in**
**that** the cylindrical pipe (2) is at least partially processed at least on its inner circumference, before it is operatively connected to the liner made of plastic (3).

## Revendications

1. Procédé de fabrication d'un récipient sous pression renforcé de fibre :
**caractérisé par les étapes suivantes**
1) Fabrication d'une ébauche de récipient sous pression, l'ébauche de récipient sous pression présentant au moins une gaine en matière plastique (3) et un tube cylindrique (2) relié fonctionnellement à celle-ci, le tube cylindrique (2) étant fabriqué séparément, le tube cylindrique (2) étant au plus partiellement durci ;
2) Surenroulement de l'ébauche de récipient sous pression.

2. Procédé conformément à la revendication 1,
**caractérisé en ce que**
le tube cylindrique (2) en matériau composite renforcé de fibre est enroulé.

3. Procédé conformément à la revendication 2,
**caractérisé en ce que**
le tube cylindrique (2) est enroulé sur un noyau d'enroulement métallique.

4. Procédé conformément à l'une des revendications 1 à 3,
**caractérisé en ce que**
le tube cylindrique (2) est coupé à longueur à partir d'un demi-produit tubulaire cylindrique.

5. Procédé conformément à l'une des revendications 1 à 3,
**caractérisé en ce que**
le tube cylindrique (2) est enroulé à la dimension finale.

6. Procédé conformément à la revendication 1,
**caractérisé en ce que**
le tube cylindrique (2) est extrudé.

7. Procédé conformément à la revendication 1,
**caractérisé en ce que**
le tube cylindrique (2) est pultrudé.

8. Procédé conformément à l'une des revendications précédentes,
**caractérisé en ce que**
la gaine en matière plastique (3) présente une géométrie extérieure permettant de recevoir le tube cylindrique (2), de façon à ce que le tube cylindrique (2) présente une liaison par complémentarité de forme avec la gaine en matière plastique (3).

9. Procédé conformément à l'une des revendications précédentes,
**caractérisé en ce que**
un bossage (5) est en contact direct avec le tube cylindrique (2).

10. Procédé conformément à l'une des revendications précédentes,
**caractérisé en ce que**
avant le surenroulement de l'ébauche de récipient sous pression, un renforcement de la calotte du pôle (4) est appliqué sur au moins une zone du pôle de la gaine en matière plastique (3).

11. Procédé conformément à l'une des revendications précédentes,
**caractérisé en ce que**
le tube cylindrique (2) est pressé sur la gaine en matière plastique (3).

12. Procédé conformément à la revendication 10,
**caractérisé en ce que**
le tube cylindrique (2) est assemblé thermiquement sur la gaine en matière plastique (3).

13. Procédé conformément à l'une des revendications précédentes,
**caractérisé en ce que**
le tube cylindrique (2) est collé avec la gaine en matière plastique (3).

14. Procédé conformément à l'une des revendications précédentes,
**caractérisé en ce que**
le tube cylindrique (2) est usiné au moins partiellement au moins sur sa circonférence intérieure avant d'être relié fonctionnellement à la gaine en matière plastique (3)
